# EUROPEAN PATENT SPECIFICATION

(11) **EP 0 965 540 B1**
(45) Date of publication and mention of the grant of the patent: **12.02.2003**
(21) Application number: 98202049.7
(22) Date of filing: 18.06.1998
(51) Int. Cl.: B65D 88/32, B01F 13/10, B28C 9/00

(54) **A stocking and feeding plant of granular or powder materials for press-formers**
Anlage zum Lagern granulierter oder pulveriger Materialien und zum Verteilen dieser Materialien zu Pressvorrichtungen
Installation de stockage et de distribution de matériaux granulaires ou en poudre vers des presses

(43) Date of publication of application: 22.12.1999
(73) Proprietor: Ronflette S.A., 2233 Luxembourg (LU)
(72) Inventor: Stefani, Franco, 41049 Sassuolo (MO) (IT)
(74) Representative: Gotra, Stefano

(56) References cited:
- EP-A- 0 736 470
- PATENT ABSTRACTS OF JAPAN vol. 015, no. 089 (M-1088), 4 March 1991 & JP 02 305703 A (NIPPON ALUM MFG CO LTD), 19 December 1990
- PATENT ABSTRACTS OF JAPAN vol. 095, no. 004, 31 May 1995 & JP 07 004861 A (KAWASAKI STEEL CORP), 10 January 1995
- PATENT ABSTRACTS OF JAPAN vol. 016, no. 573 (M-1344), 14 December 1992 & JP 04 222392 A (KAWASAKI STEEL CORP;OTHERS: 01), 12 August 1992

## Description

The invention concerns a plant for supplying materials in granular or powder form to press-formers according to the preamble of claim 1.

The invention is especially applicable to the manufacturing of ceramic tiles.

Specifically, though not exclusively, it is useful in plants for porcelain stoneware tiles.

The porcelain stoneware production process is characterised, with respect to normal single-firing, and apart from the question of the quality of the raw materials used, by a series of additional operations that the granular or powdery material undergoes between atomisation and pressing. These operations also have the aim of determining the final aesthetic effect, which can be obtained by mixing atomised particles of various colours and different granulometries before pressing.

In the prior art the atomised powders of the various basic colours are first stocked in silos, then to be sent on to an atomiser or microniser, where, in various ways, their granulometries are altered.

According to the desired decorative effects to be achieved, the re-atomised material is then mixed with one or more basic colours, while the micronised material is usually sent on to service silos located behind the press-feeding hoppers.

To obtain composite colours, mixes of various basic atomised powders can be used, which are stocked in service silos located behind the press-feeding hoppers.

In these plants, after the atomiser there is a first battery of silos for the basic colours, which are then used for later operations and mixing; the products of the mixing are then stocked in a second battery of silos located close to the presses. The contents of the silos are constantly monitored by probes to keep the quantities stocked under control.

All transport in the working cycle is done using conveyor belts and/or weighing machine.

A plant for supplying materials in granular or powder form to press-formers of manufactured articles is disclosed from the document EP-A-736 470. Such a plant comprises:
a plurality of containers suitable for containing appropriate quantities of materials in granular or powder form;
a vertical stacker provided with a large number of cells arranged in an ordered way to form at least one structure which is extended horizontally and vertically and in which each of said cells is predisposed to receive any one of said containers ; means being provided for moving said containers so that each single container can be removed from any one cell of said cells and transferred to any other of said cells means for drawing materials in granular or powder form from containers housed in cells located in predetermined positions in said structure and for conveying said materials to machines for loading single press-formers

Plants of the above-described type are subject to many limitations. They need large covered surfaces for stocking, moving and working large quantities of granular or powdery materials and require the installation of a large number of silos, preferably steel, as well as the predisposition of long and complex conveyor belts for transporting the materials, and have the great drawback of losing large quantities of powders into the air during these long journeys, resulting in the need to install air filter systems in the involved areas.

In addition to the limitations and drawbacks as described above, there is also the question of the poor flexibility of the plants themselves, meaning that each time production is changed some of the silos have to be washed out to prevent any dirtying of the new products about to be stocked. As the silos are not small, this is a laborious operation.

Further, and also due to the size of the silos, there is the problem of managing production queues or any wrong mixture batch, as well as the inevitable problems associated with production of small batches.

There is one more very considerable practical drawback: it is impossible to have available a wide range of ready mixes for pressing, which would lead to an unsustainable increase in the number of service silos located behind the press hoppers.

The main aim of the present invention is to provide a plant for stocking and feeding granular or powdery materials to press-formers, especially ceramic tiles, which plant obviates the above-described drawbacks and limitations in the prior art.

The invention in the same way as the prior art provides numerous economic and functional advantages.

One advantage can be found in the considerable reduction in plant complexity, inasmuch as with respect to the prior art the following are literally eliminated: powder conveyor belts, together with the relative batching and weighing apparatus; silos stocking base colours; silos stocking mixtures, press service hoppers.

A further advantage consists in the considerable reduction achieved in the covered space needed to house the entire production department.

A still further advantage consists in the elimination of dispersion of powders into the air as thanks to the reduction in the material transfer distances, simple and airtight transport systems can be used.

From a functional point of view there is the indubitable advantage that the plant capacity is considerably increased, both in terms of availability of a high number of mixtures ready for pressing (certainly higher than the prior art offers) and in terms of greater possibility of producing small batches.

From a strictly technical point of view, packing down of powders is no longer a problem - which certainly cannot be said for the large-capacity silos presently in use, due to the effect of the weight bearing down on the lower levels of powders (with a concentration of humidity) and all the problems associated thereto.

Further characteristics and advantages of the present invention will better emerge from the detailed description that follows of a preferred but non-exclusive embodiment of the invention, illustrated purely by way of a nonlimiting example in the accompanying figures of the drawings, in which:

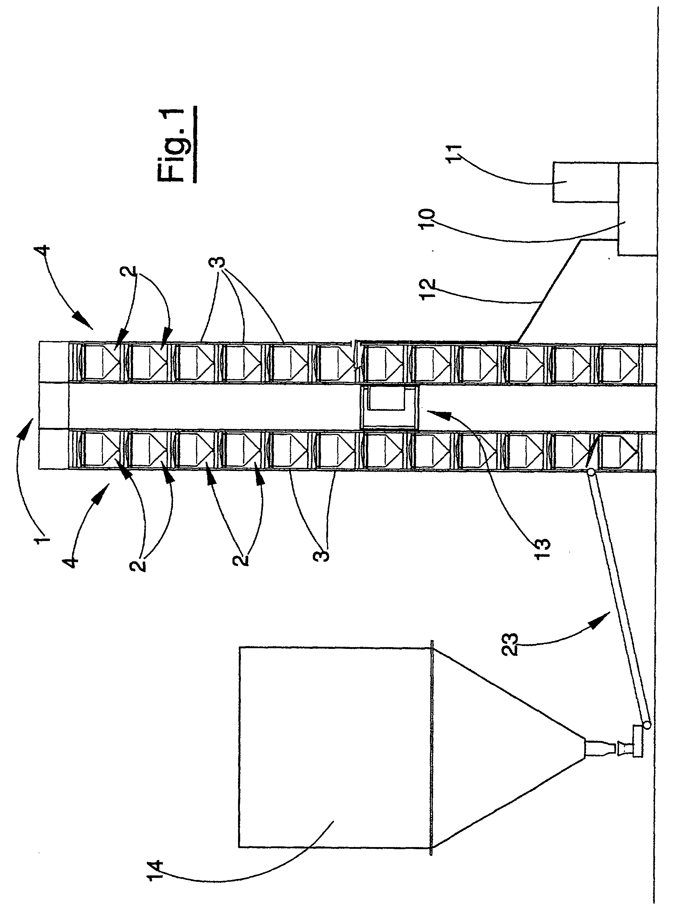

figure 1 is a schematic side view in vertical elevation;

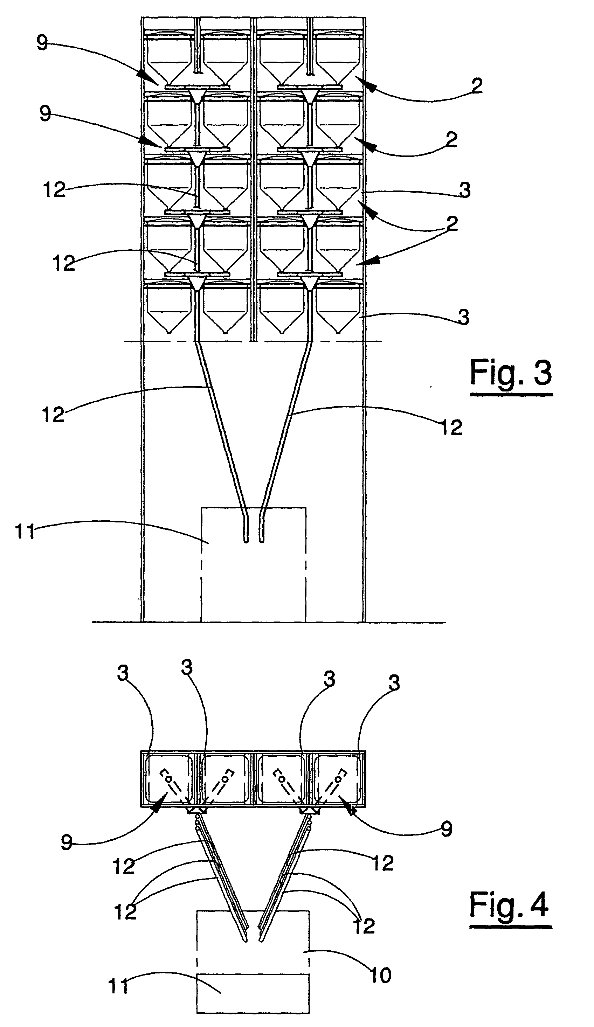

figure 2 is a reduced-scale schematic plan view from above of figure 1;
figure 3 is a part of a lateral view from the right of figure 1;
figure 4 is a schematic plan view from above of figure 3;

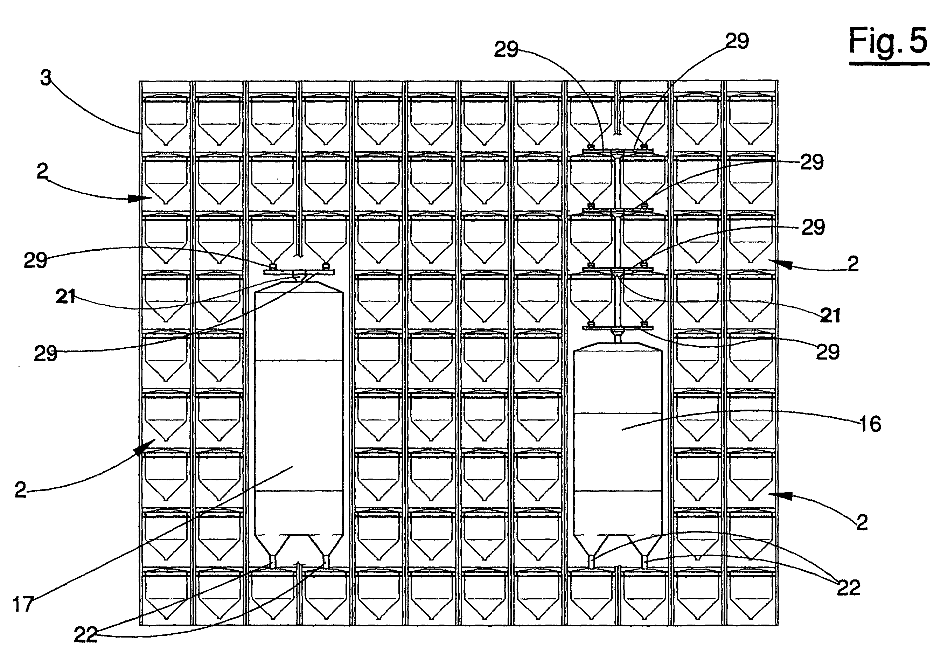

figure 5 is another part of the same lateral view from the right of figure 1;

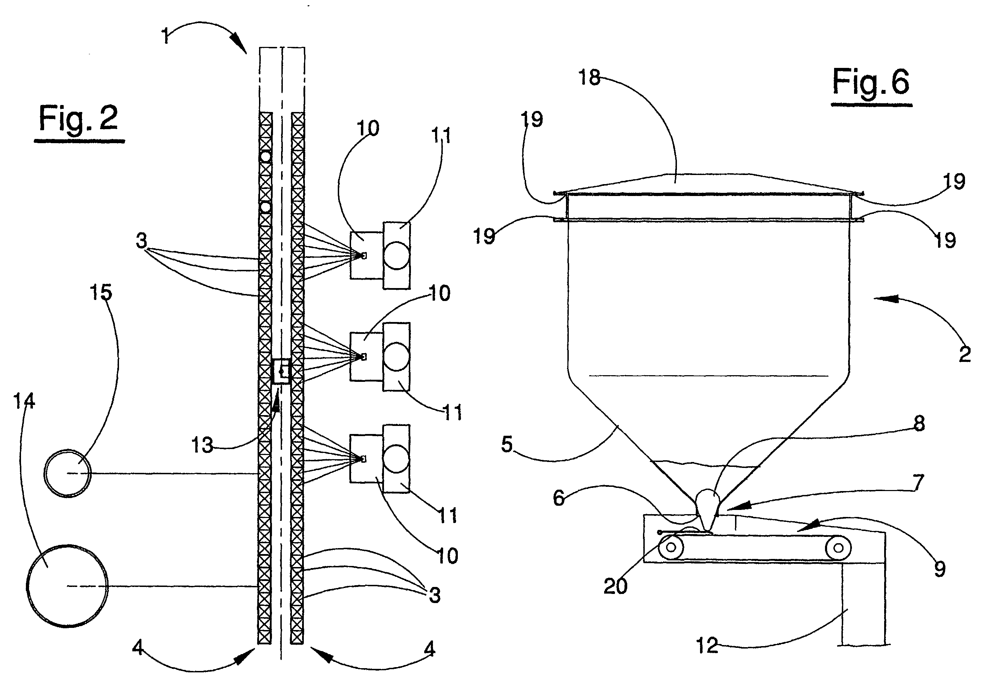

figure 6 is an enlarged-scale view of a detail of figure 3 concerning the combination of a container with a drawing device predisposed in a cell of the vertical storage container;

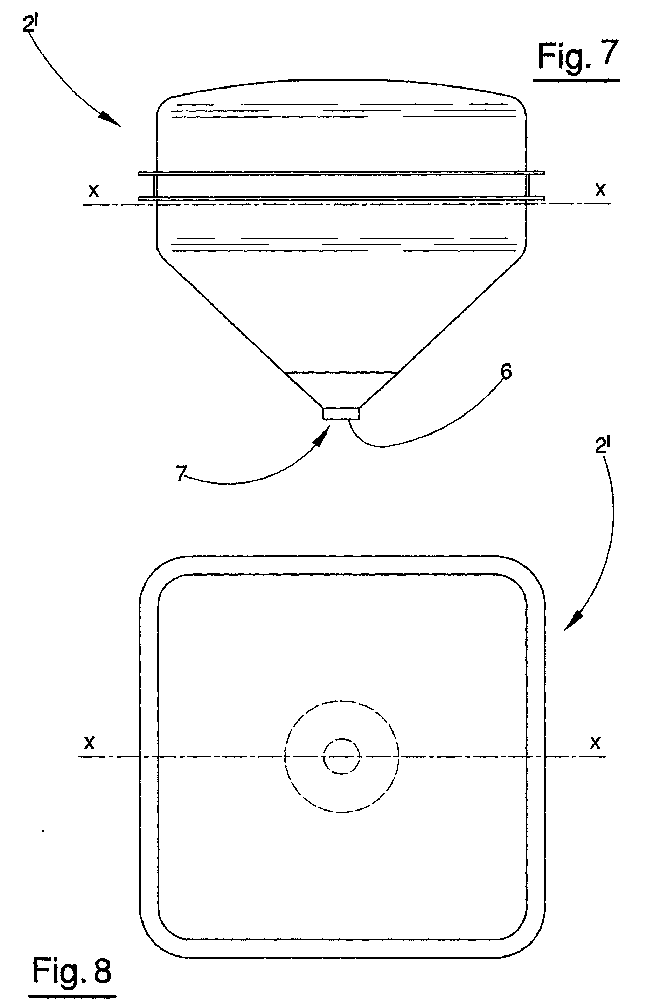

figure 7 is a lateral view of a variant of the invention;
figure 8 is a plan view from above of figure 7.

With reference to the above-mentioned figures, 1 denotes in its entirety a vertical stacker affording cells 3 for housing special containers 2.

Each cell 3 is predisposed to house a single container 2. The overall number of cells 3, and therefore the overall number of containers 2, is quite high and preferably above a thousand.

In the illustrated example, the vertical stacker 1 is formed by a first structure 4 and a second structure 4 which are two-dimensionally extended according to the horizontal and vertical directions, are situated side-by-side and are substantially parallel.

Each structure 4 is constituted by a considerable number of cells 3 arranged in a special order, so as to constitute a sort of flat vertical wall. In the illustrated embodiment, one of the structures, the second, is wholly constituted by cells 3, while the other, the first, stably houses, in the place of some of the cells, apparatus for the preparation and/or the final working of granular or powdery materials. The containers 2 are all the same and are provided with a hopper-shaped bottom 5 which ends in a discharge mouth 6 provided with a valve 7. In the illustrated embodiment each valve 7 comprises an obturator 8 having a gravity-operated closing action and which can be moved in the opposite direction, in order to open, by means external of the container 2. Other embodiments could be equipped with different valves from the illustrated one.

Each container 2 is further provided with a cover 18 having the task of hermetically closing the container 2 itself. The container 2 has the function of containing materials in granular or powder form. In the illustrated embodiment these powders are to be used in press-forming ceramic products, especially tiles.

The containers 2 are further provided superiorly with perimeter edges 19 which enable the containers 2 to be gripped for movement, as well as for stably resting, in a predetermined position, internally of the cells 3, which are provided for this purpose with sections arraged with their axes perpendicular to the vertical walls of the structures 4.

Alternatively to the above-described container 2, a container 2' could be used having a single opening, closed by the valve 7 and being closed at the top, i.e. having no removable cover 18.

In this case, to effect the loading, the single containers 2' will have to be predisposed with the valve 7 facing upwards so that the mouth 6 can function not only as a discharge mouth but also as a loading mouth. The containers 2' are normally stacked with the mouth 6 facing upwards, while, obviously, they will be stacked with their mouths 6 facing downwards when discharging. This will occur in cells 3 in which the containers 2' will have to be coupled with drawing devices 9.

Rotation of the containers 2' can be achieved by the lift transporter 13 advantageously equipped to perform the operation. To enable rotation the containers 2' can be provided with special pivots which allow rotation about axis x-x.

The possibility of rotating the containers 2' about axes x-x can also be used for powder mixing, so obviating the need for special mixers.

The movement of the containers 2 is done by a lift-transporter 13 provided with gripping and support organs of the single containers 2 and further provided with a weighing device for determining the weight of the single container 2 gripped and supported.

The lift transporter 13 operates between the two facing sides of the two structures 4 and on command can remove a single container 2 from any cell 3 and transfer it to any other cell 3 belonging to any one of the structures 4.

The high number of cells 3 means that a large number of granular or powder materials, having wide variations of colour, composition, granulometry, can be drawn from the vertical stacker 1 then to be sent directly on to the press-forming operation.

Removing these granular or powder materials is done directly from containers 2 housed in cells 3 located in predetermined positions in the second structure 4. The drawn materials are then conveyed to corresponding machines 10 for loading the single press-formers 11. In each cell 3 located in a predetermined position in the second structure 4 there is a drawing device 9 for interacting with the discharge mouth 6 of the container 2 housed in the cell 3 and for transferring the material drawn from the container 2 to a feeding chute 12 which is directly connected to the corresponding machine 10 for loading the relative press-former 11.

The drawing device 9 is completely insulated from the outside environment and is provided with an organ 20 the function of which is to raise the obturator 8 of a valve 7 located on the discharge mouth 6 of the container 2 housed in the cell 3.

In order to guarantee continuity of supply infeed, each chute 12 is supplied by at least two said drawing devices 9 provided for interacting with the discharge mouths 6 of the containers 2 housed in at least two cells 3 placed side-by-side and situated at a same height.

The cells 3, equipped with drawing devices 9 for interacting with the discharge mouths 6 of the containers 2 for transferring the drawn materials to corresponding chutes 12, are located in predetermined positions of the second structure 4, which positions are high enough to guarantee fall by force of gravity of the materials in the chutes 12.

The cells 3 are furthermore normally provided with weighing devices for weighing the single containers 2 housed therein.

Thus a plurality of chutes 12 flow into a single press-former loader 10, each of which chutes 12 is perfectly able continuously to feed the machine 10 with a flow of granular or powder material. Feed continuity is guaranteed by the fact that each chute 12 is connected to two paired containers containing the same type of material and which can function alternately (while one is substituted, the other continues to feed).

The above arrangement, and the size of the stacker, mean that many chutes 12 can be used, so that at a same time a single press-former loader 10 can be supplied with many different powders or granules: in the illustrated example up to eight can be supplied, but the number is in any case more than enough to satisfy any possible porcelain stoneware production needs, without creating any plant complications relating to transfer and movement of the powders.

The movement of the powders is done simply, by transferring the relative containers 2 internally of the stacker 1, in which the powders are stacked in an orderly fashion.

The whole system is automatically managed, in the same way as for all known vertical stackers, used for stocking goods in many industries.

For reasons of convenience, the first structure 4 can house (instead of some cells 3) an apparatus for the preparation and/or final working of the granular or powder materials. The apparatus is fed with material from the containers 2 housed in cells 3 located superiorly to the apparatus itself and is further provided with outlet devices for conveying the worked material into containers 2 housed in cells 3 located inferiorly thereto.

In particular, the apparatus for the preparation and/or final working of the granular or powder materials housed in the first structure 4 are, in the illustrated embodiment, constituted by a granulator 17 and a mixer 16. The integration of the above into the first structure 4 of the stacker 1 renders even simpler and faster all the operations connected with the preparation of materials of different characteristics.

The feeding of both the mixer 16 and the granulator 17 is realised by means of a system in all aspects similar to the system already described for feeding the press-form loaders 10. In the preselected cells 3, located superiorly to the granulator 17 and the mixer 16, drawing devices 29 are arranged, similar to the drawing devices denoted by 9. The drawing devices 29 interact with the discharge mouths 6 of the containers 2 housed in the cells 3, transferring the materials drawn to chutes 21 which open respectively into the underlying granulator 17 and mixer 16.

Discharge from the granulator 17 and the mixer 16 is done by means of discharge chutes 22 leading directly down into the underlying containers 2.

Delivery of granular of powder materials into the stacker 1 is done using means for interacting with the single containers 2 housed in cells 3 located in predetermined positions, preferably at the base of the second structure 4.

These means for interacting comprise conveyors 22 connecting external apparatus for the production of said materials with th econtainers 2 housed in the preselected cells 3.

In the illustrated embodiment these external apparatus comprise an atomiser 14 and a microniser 15.

In the present invention the transfer of all materials in the powder or granule form is done almost totally through movement of the containers 2, which are closed. This means that dispersion of the materials into the environment is eliminated.

Storing the materials in the plurality of containers 2 also enables elimination of all the silos necessary, in the prior art, for storing base colours as well as those for storing mixed ready to use materials close to the press-formers, with the obvious advantage of considerably reducing the area of the covered space necessary to house the plant.

The plant of the invention also offers the important advantage of great flexibility, essentially due to the fact that each change in production is done quickly through a simple nearing of one or more of the containers 2 housed in the cells 3 provided with drawing devices 9. This also enables unproblematic management of small production batches.

Together with a general and considerable plant simplification, the invention also has the indubitable advantage of notably increasing capacity in terms of an immediate availability of a very high number of mixtures ready for the press-formers. For example, in the illustrated embodiment, eight types of mixture are immediately available, but there could certainly be more.

## Claims

1. A plant for supplying materials in granular or powder form to press-formers of manufactured articles, comprising:
a plurality of containers (2) suitable for containing predetermined quantities of materials in granular or powder form;
a vertical stacker (1) provided with a large number of cells (3) arranged side by side to form at least one structure (4) which is extended horizontally and vertically and in which each of said cells (3) is shaped such as to receive any one of said containers (2); means being provided for moving said containers (2) so that each single container (2) can be removed from any one cell of said cells (3) and transferred to any other of said cells (3);
means for drawing materials in granular or powder form from containers (2) housed in cells (3) located in predetermined positions in said structure (4) and for conveying said materials to machines (10) for loading single press-formers (11);
means for conveying materials in granular or powder form to single containers (2) housed in predetermined cells (3) of the plurality of cells (3);
the containers (2) of said plurality of containers (2) being all identical and exhibiting at least a bottom (5) which has a hopper conformation; said bottom (5) ending in a discharge mouth (6) provided with a valve (7);
**characterised in that** said valve (7) comprises an obturator (8) which closes by force of gravity and which is predisposed to be caused to rise in an opposite direction and to open by action of means which are external to the containers (2).

2. The plant of claims 1, **characterised in that** each single cell of said cells (3) is predisposed to receive any one of said containers (2) in a predetermined position.

3. The plant of claim 2, **characterised in that** said means for drawing the granular or powder material from the containers (2) housed in the cells (3) located in predetermined positions in said structure (4) and for conveying the materials to corresponding machines (10) for loading a corresponding press-former (11) comprise, for each single cell of the cells (3), a drawing device (9) which interacts with the discharge mouth (6) of the container (2) housed in the cell (3) and transfers the drawn material from the container (2) to a chute (12) which is directly connected to a corresponding machine (10) for loading a press-former (11).

4. The plant of claim 3, **characterised in that** the chute (12) is fed by at least two said drawing devices (9) for interacting with the discharge mouths (6) of the containers (2) housed in at least two cells (3) set side-by-side at a same height.

5. The plant of claim 4, **characterised in that** the cells (3), provided with said drawing devices (9) for interacting with the discharge mouths (6) of the containers (2) to transfer the drawn materials to the chutes (12) are located in predetermined positions of the structure (4) and are afforded a sufficient clearance space to ensure that the materials fall by force of gravity internally of the chutes (12).

6. The plant of claim 5, **characterised in that** at least the cells (3), provided with said drawing devices (9) for interacting with the discharge mouths (6) of the containers (2) to transfer the drawn materials to the chutes (12) are provided with weighing devices for weighing each of the containers housed in said cells (3).

7. The plant of claim 1 or 6, **characterised in that** said means for moving said containers (2) so that each single container (2) thereof can be removed from any cell of the cells (3) and transferred to any cell of the cells (3) comprise a lift transporter (13) equipped with organs for gripping and supporting each container (2) and provided with a weighing device for determining a weight of each single container (2) when gripped and supported.

8. The plant of claim 1 or 7, **characterised in that** said structure (4) is extended vertically and horizontally and can house apparatus for preparation of and final working of said granular and powder material; said apparatus being fed with material from the containers (2) housed in cells (3) located superiorly to the apparatus and being provided with devices for discharging able to transfer the worked material into containers (2) housed in cells (3) located inferiorly to the apparatus.

9. The plant of claim 8, **characterised in that** said vertical stacker (1) comprises two of said structures (4), a first structure and a a second structure, both extended vertically and horizontally and set side by side and parallel one to another; the lift transporter working between facing sides of said first and second structure; said lift transporter having the task of moving said containers (2) so that a single container of said containers (2) can be removed from any cell of the cells (3) and transferred to another any cell of the cells (3) in either of the first and the second structures.

10. The plant of claim 9, **characterised in that** the apparatus for preparation and final working of said granular or powder material are housed in the first or the second of the two structures (4), while the means for drawing the material from containers (2) housed in cells (3), also transport the material to corresponding machines (10) for loading press-formers (11) and comprise, for each single cell (3), a drawing device (9) for interacting with the discharge mouth (6) of the container (2) housed in the cell (3) and for transferring the material drawn from the container (2) to a chute (12) which is directly connected to the corresponding machine (10) for loading a press-former (11), the means for drawing being located in the other of the first or second structures.

11. The plant of claim 10, **characterised in that** the means for supplying granular or powder materials to single containers (2) housed in predetermined cells (3) comprise conveyors connecting external apparatus for production of said material with the containers (2) housed in the predetermined cells (3) of the first or second structure.

12. The plant of claim 11, **characterised in that** the external apparatus for the production of said material in granular or powder form comprise an atomiser (14).

13. The plant of claim 11 or 12, **characterised in that** said external apparatus for the production of said granular or powder material comprise a microniser (15).

14. The plant of claim 13, **characterised in that** said apparatus for the preparation and final working of said granular or powder material comprise a mixer (16).

15. The plant of claim 13 or 14, **characterised in that** said apparatus for the preparation and final working of said granular or powder materials comprise a granulator (17).

16. The plant of any one of claims from 1 to 15, **characterised in that** each container (2) is provided with a single opening, constituted by the discharge mouth (6), which is closed by the valve (7) and is also used as a loading mouth; each container (2) being provided with coaxial pivots (23) for rotating the container (2).

## Patentansprüche

1. Anlage zum Zuführen von Materialien in granulierter oder pulverisierter Form an Formpressen zum Herstellen von Gegenständen, enthaltend:
- eine Anzahl von Behältern (2), geeignet zur Aufnahme von bestimmten Mengen an Material in granulierter oder pulverisierter Form;
- einen vertikalen Stapler (1), versehen mit einer grossen Anzahl von Zellen (3), die Seite an Seite angeordnet sind, um wenigstens eine Struktur (4) zu bilden, welche sich horizontal und vertikal erstreckt, und in welcher jede der genannten Zellen (3) so ausgeformt ist, dass sie einen beliebigen der genannten Behälter (2) aufnehmen kann; wobei Mittel zum Bewegen der genannten Behälter (2) vorgesehen sind, so dass jeder einzelne Behälter (2) aus einer beliebigen der genannten Zellen (3) entnommen und an eine andere der genannten Zellen (3) weitergeleitet werden kann;
- Mittel zum Entnehmen des Materials in granulierter oder pulverisierter Form aus den Behältern (2), vorhanden in Zellen (3), die in bestimmten Positionen der genannten Struktur (4) angeordnet sind, und zum Weiterleiten des genannten Materials an Maschinen (10) zum Laden der einzelnen Formpressen;
- Mittel zum Fördern des Materials in granulierter oder pulverisierter Form zu den einzelnen Behältern (2), die in bestimmten Zellen (3) der Anzahl von Zellen (3) angeordnet sind; wobei die Behälter (2) der genannten Anzahl von Behältern (2) alle identisch sind und wenigstens einen Boden (5) aufweisen, welcher die Ausbildung eines Trichters hat; wobei der genannte Boden (5) in einer mit einem Ventil (7) versehenen Auslassöffnung (6) mündet;
**dadurch gekennzeichnet, dass** das genannte Ventil (7) einen Verschluss (8) enthält, welcher durch Schwerkraft schliesst, und welcher dazu vorgesehen ist, durch die Wirkung von Mitteln, die sich ausserhalb der Behälter (2) befinden, in entgegengesetzter Richtung angehoben zu werden und sich zu öffnen.

2. Anlage nach Patentanspruch 1, **dadurch gekennzeichnet, dass** jede einzelne Zelle der genannten Zellen (3) dazu vorgesehen ist, einen beliebigen der genannten Behälter (2) in einer bestimmten Position aufzunehmen.

3. Anlage nach Patentanspruch 2, **dadurch gekennzeichnet, dass** die genannten Mittel zum Entnehmen des granulierten oder pulverisierten Materials aus den Behältern (2), letztere aufgenommen in den Zellen (3), die in bestimmten Positionen in der genannten Struktur (4) angeordnet sind, und zum Fördern des Materials an die Maschinen (10) zum Laden entsprechender Formpressen (11), für jede einzelne Zelle (3) eine Entnahmevorrichtung (9) enthalten, welche mit der Auslassöffnung (6) des in der Zelle (3) angeordneten Behälters (2) zusammenwirkt und das entnommene Material von dem Behälter (2) zu einem Kanal (12) leitet, welcher direkt an die entsprechende Maschine zum Laden einer Formpresse (11) angeschlossen ist.

4. Anlage nach Patentanspruch 3, **dadurch gekennzeichnet, dass** der genannte Kanal (12) von wenigstens zwei der genannten Entnahmevorrichtungen (9) beschickt wird, um mit den Auslassöffnungen (6) von den Behältern (2) zusammenzuwirken, die in wenigstens zwei Seite an Seite und auf derselben Höhe angeordneten Zellen (3) enthalten sind.

5. Anlage nach Patentanspruch 4, **dadurch gekennzeichnet, dass** die Zellen (3), die mit den Entnahmevorrichtungen (9) zum Zusammenwirken mit den Auslassöffnungen (6) der Behälter (2) versehen sind, um das entnommene Material den Kanälen (12) zuzuführen, in bestimmten Positionen der Struktur (4) angeordnet sind und durch einen ausreichenden Freiraum ausgezeichnet sind, um zu sichern, dass die Materialien durch Schwerkraft in das Innere der Kanäle (12) fallen.

6. Anlage nach Patentanspruch 5, **dadurch gekennzeichnet, dass** wenigstens die Zellen (3), die mit den genannten Entnahmevorrichtungen (9) zum Zusammenwirken mit den Auslassöffhungen (6) der Behälter (2) versehen sind, um das entnommene Material den Kanälen (12) zuzuführen, mit Wiegevorrichtungen ausgestattet sind, um jeden der in den genannten Zellen (3) enthaltenen Behälter (2) zu wiegen.

7. Anlage nach Patentanspruch 6, **dadurch gekennzeichnet, dass** die genannten Mittel zum Bewegen der genannten Behälter (2), so dass jeder einzelne Behälter (2) derselben aus einer beliebigen der Zellen (3) entnommen und an jede beliebige der Zellen (3) weitergeleitet werden kann, einen Hebeförderer (13) enthalten, der mit Elementen zum Greifen und Halten eines jeden Behälters (2) ausgestattet und mit einer Wiegevorrichtung versehen ist, um das Gewicht jedes einzelnen gegriffenen und getragenen Behälters (2) zu bestimmen.

8. Anlage nach Patentanspruch 7, **dadurch gekennzeichnet, dass** sich die genannte Struktur (4) vertikal und horizontal erstreckt und Geräte zur Zubereitung und Fertigbearbeitung des genannten granulierten und pulverisierten Materials aufnehmen kann; wobei die genannten Geräte mit Material aus den Behältern (2) beschickt werden, die in den oberhalb der Geräte angeordneten Zellen (3) aufgenommen und mit Vorrichtungen zum Entladen versehen sind, in der Lage, das bearbeitete Material in Behälter (2) zu übergeben, die in unterhalb der Geräte angeordneten Zellen (3) aufgenommen sind.

9. Anlage nach Patentanspruch 8, **dadurch gekennzeichnet, dass** die genannten vertikalen Stapler (1) zwei der genannten Strukturen (4) enthalten, eine erste Struktur und eine zweite Struktur, die sich beide vertikal und horizontale erstrecken sowie Seite an Seite und parallel zueinander angeordnet sind; wobei der genannte Hebeförderer zwischen den einander zugewandten Seiten der genannten ersten und zweiten Struktur arbeitet; und wobei der genannte Hebeförderer die Aufgabe hat, die genannten Behälter (2) so zu bewegen, dass ein einzelner Behälter der genannten Behälter (2) aus einer beliebigen der Zellen (3) entnommen und an eine andere beliebige der Zellen (3) übergeben werden kann, sei es in der ersten wie auch der zweiten Struktur.

10. Anlage nach Patentanspruch 9, **dadurch gekennzeichnet, dass** die Geräte zur Zubereitung und Fertigbearbeitung des genannten granulierten oder pulverisierten Materials in der ersten oder in der zweiten der beiden Strukturen (4) angeordnet sind, während die Mittel zur Entnahme des Materials aus den in den Zellen (3) enthaltenen Behältern (2) das Material auch zu entsprechenden Maschinen (10) zum Laden der Formpressen (11) transportieren und für jede einzelne Zelle (3) eine Entnahmevorrichtung (9) zum Zusammenwirken mit der Auslassöffhung (6) des in der Zelle (3) aufgenommen Behälters (2) und zum Weiterleiten des aus dem Behälter (2) entnommenen Materials an einen Kanal (12) enthalten, welcher direkt an die entsprechende Maschine (10) zum Laden einer Formpresse (11) angeschlossen ist, wobei die Mittel zur Entnahme in der anderen der ersten oder zweiten Strukturen angeordnet sind.

11. Anlage nach Patentanspruch 10, **dadurch gekennzeichnet, dass** die Mittel zum Füllen der einzelnen, in bestimmten Zellen (3) angeordneten Behälter (2) mit granuliertem oder pulverisiertem Material Förderer enthalten, welche die aussenliegenden Vorrichtungen zur Produktion des genannten Materials mit den in bestimmten Zellen (3) der ersten oder zweiten Struktur angeordneten Behältern (2) verbinden.

12. Anlage nach Patentanspruch 11, **dadurch gekennzeichnet, dass** die aussenliegenden Vorrichtungen zur Produktion des genannten Materials in granulierter oder pulverisierter Form einen Zerstäuber (14) enthalten.

13. Anlage nach Patentanspruch 11 oder 12, **dadurch gekennzeichnet, dass** die genannten aussenliegenden Vorrichtungen zur Produktion des genannten granulierten oder pulverisierten Materials eine Feinstmahlvorrichtung (15) enthalten.

14. Anlage nach Patentanspruch 13, **dadurch gekennzeichnet, dass** die genannten Geräte zur Zubereitung und endgültigen Bearbeitung des genannten granulierten oder pulverisierten Materials einen Mischer (16) enthalten.

15. Anlage nach Patentanspruch 13 oder 14, **dadurch gekennzeichnet, dass** die genannten Geräte zur Zubereitung und Fertigbearbeitung des genannten granulierten oder pulverisierten Materials einen Granulierer (17) enthalten.

16. Anlage nach einem beliebigen der Patentansprüche von 1 bis 15, **dadurch gekennzeichnet, dass** jeder Behälter (2) mit einer einzigen Öffnung versehen ist, bestehend aus der Auslassöffnung (6), welche durch das Ventil (7) verschlossen und auch als Ladeöffnung benutzt wird; wobei jeder Behälter (2) mit koaxialen Zapfen (23) zum Drehen des Behälters (2) selbst versehen ist.

## Revendications

1. Une installation pour l'alimentation de matériaux granulaires ou en poudre vers des presses de formage d'articles manufacturés, comprenant:
- une pluralité de conteneurs (2) aptes à contenir des prédéterminées quantités de matériaux granulaires ou en poudre;
- un magasin vertical (1) pourvu d'un grand nombre de cellules (3) disposées l'une contre l'autre pour former au moins une structure (4) s'étendant horizontalement et verticalement et dans laquelle chacune desdites cellules (3) est conformée de manière à recevoir n'importe lequel desdits conteneurs (2); des moyens étant prévus pour mouvementer lesdits conteneurs (2) de manière à ce que chaque conteneur (2) puisse être prélevé de n'importe quelle cellule (3) et transféré dans n'importe quelle autre cellule (3);
- des moyens pour prélever des matériaux granulaires ou en poudre de conteneurs (2) logés dans des cellules (3) disposées dans des positions prédéterminées dans ladite structure (4), et pour convoyer lesdits matériaux vers des machines (10) pour charger des presses de formage (11) ;
- des moyens pour convoyer des matériaux granulaires ou en poudre de conteneurs (2) logés dans des cellules (3) prédéterminées de la pluralité de cellules (3); les conteneurs (2) de ladite pluralité de conteneurs (2) étant tous identiques et présentant au moins une base (5) avec une conformation en trémie; ladite base débouchant dans une bouche (6) de déchargement pourvue d'une valve (7) ;
**caractérisée en ce que** ladite valve (7) comprend un obturateur (8) qui se ferme par gravité et qui est prédisposé pour se soulever dans une direction opposée et pour s'ouvrir sous l'action de moyens extérieurs aux conteneurs (2).

2. L'installation de la revendication 1, **caractérisée en ce que** chaque cellule desdites cellules (3) est prédisposée pour recevoir n'importe lequel desdits conteneurs (2) dans une position prédéterminée.

3. L'installation de la revendication 2, **caractérisée en ce que** lesdits moyens pour le prélèvement de matériau granulaire ou en poudre des conteneurs (2) logés dans les cellules (3) disposées dans des positions prédéterminées dans ladite structure (4), et pour convoyer les matériaux dans les machines correspondantes (10) pour charger une presse de formage (11) correspondante, comprennent, pour chaque cellule des cellules (3), un dispositif (9) de prélèvement qui interagit avec la bouche de déchargement (6) du conteneur (2) logé dans la cellule (3) et transfère le matériau prélevé du conteneur (2) vers un conduit d'alimentation (12) directement relié à une machine (10) correspondante pour charger une presse de formage (11) .

4. L'installation de la revendication 3, **caractérisée en ce que** le conduit (12) est alimenté par au moins deux dispositifs de prélèvement (9) pour interagir avec les bouches de déchargement (6) des conteneurs (2) logés dans au moins deux cellules (3) disposées côte-à-côte à la même hauteur.

5. L'installation de la revendication 4, **caractérisée en ce que** les cellules (3), pourvues desdits dispositifs de prélèvement (9) pour interagir avec les bouches de déchargement (6) des conteneurs (2) et transférer le matériau prélevé vers les conduits d'alimentation (12), sont situées dans des positions prédéterminées de la structure (4) et sont caractérisées d'un espace suffisant à assurer que le matériau tombe par gravité à l'intérieur des conduits d'alimentation (12).

6. L'installation de la revendication 5, **caractérisée en ce qu'**au moins les cellules (3), pourvues desdits dispositifs de prélèvement (9) pour interagir avec les bouches de déchargement (6) des conteneurs (2) pour transférer le matériau prélevé vers les conduits d'alimentation (12), sont pourvues de dispositifs de pesage pour peser chacun desdits conteneurs logés dans lesdites cellules (3).

7. L'installation de la revendication 1, **caractérisée en ce que** lesdits moyens pour mouvementer lesdits conteneurs (2), de manière à ce que chaque conteneur (2) puisse être prélevé de n'importe quelle cellule des cellules (3) et transféré vers n'importe quelle cellule des cellules (3), comprennent un transporteur-élévateur (13) équipé d'organes pour prendre et supporter chaque conteneur (2) et pourvu d'un dispositif de pesage pour déterminer le poids de chaque conteneur (2) lorsqu'il est pris et supporté.

8. L'installation de la revendication 1 ou 7, **caractérisée en ce que** ladite structure (4) s'étend verticalement et horizontalement et peut loger des appareils pour la préparation et le traitement final dudit matériau granulaire ou en poudre; lesdits appareils étant alimentés en matériau depuis les conteneurs (2) logés dans les cellules (3) disposées au-dessus des appareils et étant pourvus de dispositifs de déchargement pouvant transférer la matériau traité dans des conteneurs (2) logés dans des cellules (3) disposées au-dessous des appareils.

9. L'installation de la revendication 8, **caractérisée en ce que** ledit magasin vertical (1) comprend deux desdites structures (4), une première et une seconde structure, toutes deux s'étendant verticalement et horizontalement et étant disposées côte-à-côte et parallèles entre elles; le transporteur-élévateur opérant entre les côtés se faisant face de ladite première et seconde structure; ledit transporteur-élévateur ayant pour fonction de mouvementer lesdits conteneurs (2) de manière à ce qu'un conteneur desdits conteneurs (2) puisse être prélevé de n'importe quelle cellule des cellules (3) et transféré à n'importe quelle autre cellule des cellules (3) aussi bien dans la première que dans la seconde structure.

10. L'installation de la revendication 9, **caractérisée en ce que** les appareils pour la préparation et le traitement final dudit matériau granulaire ou en poudre sont logés dans la première ou dans la seconde structure (4), alors que les moyens de prélèvement du matériau des conteneurs (2) logés dans les cellules (3) transportent également le matériau vers les machines correspondantes (10) pour charger les presses de formage (11) et comprennent, pour chaque cellule (3), un dispositif de prélèvement (9) pour interagir avec la bouche de déchargement (6) du conteneur (2) logé dans une cellule (3) et pour transférer le matériau prélevé dans le conteneur (2) vers un conduit d'alimentation (12) directement relié à la machine (10) correspondante pour charger une presse de formage (11), les moyens de prélèvement étant disposés sur l'autre structure.

11. L'installation de la revendication 10, **caractérisée en ce que** les moyens pour alimenter en matériaux granulaires ou en poudre des conteneurs (2) logés dans des cellules (3) prédéterminées comprennent des convoyeurs reliant des appareils externes pour la production dudit matériau avec les conteneurs (2) logés dans les cellules (3) prédéterminées de la première ou de la seconde structure.

12. L'installation de la revendication 11, **caractérisée en ce que** les appareils externes pour la production dudit matériau granulaire ou en poudre comprennent un atomiseur (14).

13. L'installation de la revendication 11 ou 12, **caractérisée en ce que** lesdits appareils externes pour la production dudit matériau granulaire ou en poudre comprennent un microniseur (15).

14. L'installation de la revendication 13, **caractérisée en ce que** lesdits appareils pour la préparation et le traitement final dudit matériau granulaire ou en poudre comprennent un mixeur (16).

15. L'installation de la revendication 13 ou 14, **caractérisée en ce que** lesdits appareils pour la préparation et le traitement final desdits matériaux granulaires ou en poudre comprennent un granulateur (17).

16. L'installation de n'importe laquelle des revendications 1 à 15, **caractérisée en ce que** chaque conteneur (2) est pourvu d'une ouverture, constituée par la bouche de déchargement (6), fermée par la valve (7) et également utilisée comme une bouche de chargement; chaque conteneur (2) étant pourvu de pivots coaxiaux (23) pour pivoter le conteneur (2).
